(19) Europäisches Patentamt
European Patent Office
Office européen des brevets

(11) **EP 2 324 551 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(21) Anmeldenummer: **09782255.5**

(22) Anmeldetag: **27.08.2009**

(51) Int Cl.:
*H02J 3/38* *(2006.01)*     *F03D 7/00* *(2006.01)*
*F03D 7/02* *(2006.01)*     *F03D 7/04* *(2006.01)*
*F03D 9/00* *(2016.01)*

(86) Internationale Anmeldenummer:
**PCT/EP2009/061041**

(87) Internationale Veröffentlichungsnummer:
**WO 2010/028954 (18.03.2010 Gazette 2010/11)**

(54) **LEISTUNGSREGELUNG FÜR EINEN WINDPARK**

POWER CONTROL FOR A WIND PARK

RÉGULATION DE PUISSANCE POUR UN PARC ÉOLIEN

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.09.2008 DE 102008047667**

(43) Veröffentlichungstag der Anmeldung:
**25.05.2011 Patentblatt 2011/21**

(73) Patentinhaber: **Siemens Aktiengesellschaft
80333 München (DE)**

(72) Erfinder:
• **DOMMASCHK, Mike
91096 Möhrendorf (DE)**
• **DORN, Jörg
96155 Buttenheim (DE)**
• **EULER, Ingo
91056 Erlangen (DE)**
• **KARLECIK-MAIER, Franz
91315 Höchstadt (DE)**
• **LANG, Jörg
95346 Stadtsteinach (DE)**
• **WÜRFLINGER, Klaus
90419 Nürnberg (DE)**

(56) Entgegenhaltungen:
**EP-A- 1 752 659     EP-A- 1 879 277
WO-A-03/030329     WO-A-2009/019306
DE-A1- 10 044 262**

**Beschreibung**

Die Erfindung betriff ein Verfahren zum Regeln der von einem Windpark abgegebenen Leistung.

Die DE 100 44 262 A1 offenbart einen Offshore-Windpark, der aus einer Anzahl getrieberloser Windkraftanlagen besteht. Jede Windenergieanlage ist mit Blattverstellantrieben ausgerüstet, um die Blattanstellwinkel der Rotorblätter zweckmäßig einzustellen. Die Windenergieanlagen sind über einen Transformator an einen Gleichrichter angeschlossen, welcher gleichspannungsseitig mit einem landsseitigen Wechselrichter verbunden ist, der die vom Windpark erzeugte Energie in ein Wechselspannungsnetz einspeist. Eine Blattwinkelverstellung erfolgt zur Dämpfung von Schwingungen im Antriebsstrang.

Die EP 1 752 659 A2 beschreibt ein Verfahren zum Betrieb eines Windparks, der mehrere Windenergieanlagen aufweist. Der Windpark ist an ein Versorgungsnetz angeschlossen. Bei Ausfall des Versorgungsnetzes wird eine Notstromversorgung in Betrieb genommen.

Die WO 03/030329 beschreibt ebenfalls ein Verfahren zum Regeln eines Windparks, der mehrere Windenergieanlagen aufweist. Die von der Windenergieanlage erzeugte Wechselspannung wird zunächst durch einen Gleichrichter gleichgerichtet, wobei der Gleichrichter über einen Gleichspannungszwischenkreis mit einem Wechselrichter verbunden ist. Der Wechselrichter speist die von den Windenergieanlagen erzeugte elektrische Leistung direkt in ein Versorgungsnetz ein. Bei der Regelung des Wechselrichters wird berücksichtigt, dass die Netzfrequenz mit zunehmender Wirkleistung im Versorgungsnetz ansteigt und umgekehrt. Mittels eines Netzfrequenzaufnehmers wird daher die Netzfrequenz am Netzeinspeisepunkt des Wechselrichters ermittelt. Sobald die Netzfrequenz einen vorbestimmten Wert übersteigt, wird die elektrisch abgegebene Wirkleistung herabgesetzt, um einem weiteren Anstieg der Netzfrequenz entgegen zu wirken. Auf diese Art und Weise können Netzfrequenzspannungen vermieden werden.

Weitere Windparkregelungsverfahren sind aus der WO 2009/019306 A1 und der EP 1 879 277 A2 bekannt.

In der DE 10 2006 032 389 A1 ist ein Windpark beschrieben, der aus einer Vielzahl von Windenergieanlagen besteht. Jede Windenergieanlage umfasst eine Windturbine, deren Läufer mit Rotorblättern verbunden ist, so dass bei einem Aufkommen von Wind der Läufer in Rotation versetzt und eine elektrische Leistung erzeugt wird. Jede Windenergieanlage verfügt ferner über eine Anlagensteuerung, über welche die von der Windanlage erzeugte elektrische Leistung einstellbar ist. Dabei sind die Windenergieanlagen über ein elektrisches Netz miteinander verbunden, so dass ein Windpark entsteht. Der Windpark ist an ein elektrisches Wechselspannungsnetz angeschlossen, in den die elektrische Wirkleistung der Windenergieanlagen eingespeist wird. Zur Regelung der eingespeisten Gesamtwirkleistung ist ein Windparkregler vorgesehen, der mittels Datenleitungen mit jeder Anlagensteuerung verbunden ist. Über diese Datenleitungen gibt der Windparkregler Sollwerte für die von den Windenergieanlagen in das Netz einzuspeisende Wirkleistung vor.

Aus Windenergieanlagen bestehende Windparks und Verfahren zur Regelung eines solchen Windparks sind ferner in der DE 10 2004 048 341 A1, WO 01/52379 A2, EP 1 337 754 B1 und in der WO 97/45908 beschrieben.

Den Verfahren gemäß dem Stand der Technik und insbesondere dem Verfahren der eingangs genannten Art haftet der Nachteil an, dass die übergeordnete Regelung des Windparks mit den untergeordneten Regelungen der Windenergieanlagen über eine Kommunikationsleitung verknüpft werden muss, die eine schnelle Datenübertragung gewährleistet. Insbesondere bei einer größeren Anzahl von Windenergieanlagen ist der Aufbau eines solchen schnellen Kommunikationsnetzes jedoch kostenintensiv und aufwändig.

Aufgabe der Erfindung ist es, ein Verfahren der eingangs genannten Art bereitzustellen, das aufwandsarm und kostengünstig ist.

Gelöst wird diese Aufgabe durch das Verfahren nach Anspruch 1. Vorteilhafte Ausgestaltungen werden in den Unteransprüchen angegeben.

Soweit die im Folgenden angegebenen Beispiele nicht durch den Gegenstand der Ansprüche abgedeckt sind, bilden sie keinen Teil der Erfindung.

Die Erfindung löst diese Aufgabe durch ein Verfahren zum Regeln der von einem Windpark abgegebenen Leistung, wobei der Windpark über Windenergieanlagen verfügt, die mittels eines Windparknetzes elektrisch miteinander verbunden sind, bei dem eine Windparkregelungseinheit einen Windparkvorgabewert an Anlagenregelungseinheiten überträgt, die jeweils zum Regeln einer Windenergieanlage vorgesehen sind, alle Anlagenregelungseinheiten den gleichen Windparkvorgabewert erhalten, wobei jede Anlagenregelungseinheit auf der Grundlage des Windparkvorgabewertes und auf der Grundlage einer gemessenen Anlagenistleistung $P_I$, die der von der zugeordneten Windenergieanlage erzeugten Leistung entspricht, eine Anlagenmaximalleistung $P_{max}$ ermittelt, die jeweils zugeordnete Windenergieanlage so regelt, dass die Anlagenistleistung $P_I$ kleiner ist als die Anlagenmaximalleistung $P_{max}$, wobei der Windparkvorgabewert ein Windparkleistungsgradient dP/dt ist, wobei jede Anlagenregelungseinheit aus dem Windparkleistungsgradient dP/dt einen auf sie zugeschnittenen Anlagenleistungsgradienten dp/dt ableitet und die Berechnung der ihr zugeordneten Anlagenmaximalleistung $P_{max}$ auf der Grundlage ihres Anlagenleistungsgradienten dp/dt erfolgt.

Erfindungsgemäß stellt eine übergeordnete Windparkregelung einen allen Anlagenregelungseinheiten gemeinsamen Windparkvorgabewert bereit. Dieser Windparkvorgabewert kann daher auf einfache Art und

Weise beispielsweise über ein Rundsteuersignal an die Anlagenregelungseinheiten übermittelt werden. Eine aufwändigere zielgerichtete schnelle Kommunikation, bei der ein Sollwert für die Regelung übermittelt werden muss, entfällt im Rahmen der Erfindung. Auf diese Weise werden die Kosten für eine Kommunikation deutlich herabgesetzt.

Erfindungsgemäß ist der Windparkvorgabewert ein Windparkleistungsgradient dP/dt, wobei jede Anlagenregelungseinheit aus dem Windparkleistungsgradient dP/dt einen auf sie zugeschnittenen Anlagenleistungsgradienten dp/dt ableitet und die Berechnung der ihr zugeordneten Anlagenmaximalleistung $P_{max}$ auf der Grundlage ihres Anlagenleistungsgradienten dp/dt erfolgt. Die Ermittlung des spezifischen Anlagenleistungsgradienten aus dem allgemeinen Windparkleistungsgradient erfolgt beispielsweise mit Hilfe einer Kennlinieneinheit, in der eine parametrisierbare Kennlinie für die Umrechnung des Windparkleistungsgradienten zum Anlagenleistungsgradienten gespeichert ist. Als Parameter oder Einflussgrößen zur Anpassung der Kennlinie an äußere Randbedingungen dienen beispielsweise die der Windenergieanlage jeweils zugeordnete Nennleistung, die für diese ermittelte Windrichtung, die Windgeschwindigkeit und der Standort der jeweiligen Windenergieanlage. Die Übertragung eines Leistungsgradienten ermöglicht dem Betreiber auch die Geschwindigkeit vorzugeben, mit der beispielsweise ein neuer Betriebspunkt des Windparks angefahren werden soll. Trotz dieser in der Praxis wichtigen Informationsfülle werden keine neuen Anforderungen an die Übertragung gestellt, die daher einfach und kostengünstig bleiben kann.

Gemäß einer bevorzugten Ausgestaltung der Erfindung ist die Windparkregelungseinheit mit einer Umrichterregelungseinheit verknüpft und ein mit dem Windpark verbundener Umrichter wird so geregelt, dass dieser im Windparknetz eine Wechselspannung U1, 2, 3 erzeugt, deren Istfrequenz $\gamma_{ist}$ dem Windparkvorgabewert entspricht, wobei jede Anlagenregelungseinheit die Istfrequenz $\gamma_{ist}$ erfasst und aus der Istfrequenz $\gamma_{ist}$ den Windparkvorgabewert ermittelt. Hier erfolgt die Kommunikation zwischen der übergeordneten Windparkregelungseinheit und den Anlageregelungseinheiten über die Istfrequenz der Wechselspannung, mit der das die Windenergieanlagen verbindende Windparknetz beaufschlagt ist. Der Aufbau der Wechselspannung im Windparknetz erfolgt über einen Umrichter, da der Netzaufbau durch die Windenergieanlagen allein nicht möglich ist.

Der hierzu eingesetzte Umrichter weist vorteilhafterweise Leistungshalbleiterventile auf, die in einer oder mehreren Brückenschaltungen miteinander verbunden sind. Dabei umfasst jedes Leistungshalbleiterventil beispielsweise eine Reihenschaltung aus Leistungshalbleitern, beispielsweise aus abschaltbaren Leistungshalbleitern mit jeweils gegensinnig parallel dazu geschalteten Freilaufdioden. Abweichend hiervon umfasst jedes Leistungshalbleiterventil eine Reihenschaltung von bipolaren Submodulen, wobei jedes Submodul über einen Energiespeicher verfügt, an dem eine Spannung abfällt. Darüber hinaus ist jedem Submodul eine Schaltung von Leistungshalbleitern zugeordnet, mit denen - je nach Ansteuerung der Leistungshalbleiter - die an dem Energiespeicher abfallende Spannung oder eine Nullspannung an den Ausgang des Submoduls gelegt werden kann. Umrichter mit solchen Submodulen werden auch Multilevel-Umrichter genannt, deren Aufbau und Steuerung dem Fachmann hinreichend bekannt sind, so dass an dieser Stelle nicht näher darauf eingegangen zu werden braucht. Die Umrichtertopologie ist im Rahmen der Erfindung jedoch grundsätzlich beliebig.

Zur Steuerung des Umrichters ist eine Umrichterregelungseinheit vorgesehen, welche in Abhängigkeit vorgegebener Sollwerte Steuersignale für die Leistungshalbleiter des Umrichters bereitstellt. Über diese Umrichterregelungseinheit ist es somit möglich, die Istfrequenz der Wechselspannung U1, 2, 3 im Windparknetz vorzugeben.

Zweckmäßigerweise erfasst jede Anlagenregelungseinheit die Istfrequenz der Wechselspannung U1, 2, 3 im Windparknetz. Aus der ermittelten Istfrequenz wird anschließend der Windparkvorgabewert ermittelt. Die Regelung der Windenergieanlage erfolgt anschließend auf Grundlage des Windparkvorgabewertes in dem Sinne, dass die von der jeweiligen Windenergieanlage abgegebene Anlagenistleistung $P_I$ kleiner als die gegebene Anlagenmaximalleistung $P_{Max}$ ist. Die Art und Weise der Begrenzung der abgegebenen Anlagenistleistung ist Rahmen der Erfindung grundsätzlich beliebig und von der Bauart der jeweiligen Windenergieanlage abhängig. Beispielsweise ist es im Rahmen der Erfindung möglich, dass die Anlagenregelungseinheit den Anstellwinkel der Rotorblätter verändert, den Generator der Windenergieanlage selbst oder einen der Windenergieanlage zugeordneten Windenergieanlagenumrichter entsprechend ansteuert.

Vorteilhafterweise überträgt der Umrichter die vom Windpark erzeugte elektrische Leistung $\sum_I P_I$ , also die Summe aller Anlagenistleistungen $P_I$, über eine Gleichspannungsverbindung an einen weiteren Umrichter, der mit einem Wechselspannungsnetz verbunden ist, so dass zwischen dem Windparknetz und dem Wechselspannungsnetz eine HGÜ-Verbindung bereitgestellt ist. Gemäß diesem zweckmäßigen Ausführungsbeispiel ist das Windparknetz über eine HGÜ-Verbindung mit dem Wechselspannungsnetz verbunden. So ist beispielsweise bei einem so genannten Off-Shore-Windpark, der eine Vielzahl von Windenergieanlagen im Meer aufweist, ein zentraler Umrichter vorgesehen, der beispielsweise ebenfalls meerseitig, auf einer Meeresplattform angeordnet ist, an dem das Windparknetz einen Knotenpunkt bildet. Von dem meerseitigen Umrichter ist eine kostengünstige Gleichspannungsverbindung bis zu einem landseitig angeordneten Wechselrichter Umrichter vorgesehen. Der als Wechselrichter betriebene Umrichter erzeugt wiederum eine geeignete Wechselspannung, die dann beispielsweise über einen Transformator in ein zu versorgendes Wechselspannungsnetz eingespeist wird.

Bei einer erfindungsgemäßen Variante wird der Windparkvorgabewert mittels eines Funksignals, eines Satellitensignals oder eines kostengünstigen Kommunikationsleiters an jede Anlagenregelungseinheit übertragen. Anstelle der oder zusätzlich zur Frequenzkodierung des Windparkvorgabewertes tritt hier die separate Übertragung über kabellose oder kabelgeführte Kommunikation. Die gewählte Kommunikationsverbindung ist im Gegensatz zur derjenigen des Standes der Technik kostengünstig. Die kabelgeführte Kommunikation ist beispielsweise als handelsübliche und daher kostengünstige LAN-Verbindung realisiert.

Weitere Vorteile ergeben sich, wenn der Windparkleistungsgradient dP/dt mit Hilfe der Istfrequenz $\gamma_{ist}$ des Windparknetzes auf die Anlagenregelungseinheiten übertragen wird. Die Ermittlung des Windparkleistungsgradienten dP/dt kann dann auf einfache und genaue Art und Weise aus der zeitlichen Änderung einer Differenzfrequenz $d\gamma/dt$ abgeleitet werden, wobei die Differenzfrequenz $d\gamma$ aus der gemessenen Istfrequenz $\gamma_{ist}$ und einer vorgegebenen festen Nennfrequenz $\gamma_{nenn}$ gemäß $d\gamma = \gamma_{nenn} - \gamma_{ist}$ berechnet wird.

Zweckmäßigerweise verändert jede Anlagenregelungseinheit die von ihr erzeugte Anlagenistleistung $P_l$ dem Anlagenleistungsgradienten dp/dt entsprechend unter Gewinnung der Anlagenmaximalleistung $P_{max}$. Hierbei wird die Anlagenistleistung jedoch auf eine vorgegebene Nennmaximalleistung $P_{max,nenn}$ begrenzt.

Gemäß einer diesbezüglich zweckmäßigen Weiterentwicklung ist jeder Windenergieanlage eine Nennmaximalleistung $P_{max,nenn}$ zugeordnet. Dies ermöglicht eine individuelle Anpassung der Regelung an die unterschiedlichen Randbedingungen der jeweiligen Windenergieanlage.

Vorteilhafterweise wird die Dynamik einer Veränderung der Anlagenistleistung $P_l$ mittels einer Glättungseinheit herabgesetzt. Gemäß dieser Variante werden schnelle und nur kurzfristige Schwankungen der Anlagenistleistung nicht auf die Regelung der Windenergieanlage übertragen. Hierzu werden Leistungsmesswerte der einzelnen Anlage werden hierbei quasi geglättet, so dass nur nachhaltige Änderungen der Anlagenleistung bei der Regelung berücksichtig werden. Als Glättungseinheit kommt beispielsweise eine Rampeneinheit, die eine Rampenfunktion auf die nacheinander eingehenden Anlagenistleistungswerte anwendet, oder eine Verzögerungseinheit in Betracht. Bei der Rampeneinheit wird der zunächst eingehende Messwert mit einer immer konstanten Steigung an den darauffolgend eingehenden Messwert angenähert. Das Ausgangssignal der Glättungseinheit unterliegt daher keinen schnellen starken Schwankungen. Bei einer Verzögerungseinheit ist die Geschwindigkeit, mit der die eingangsseitigen Änderungen ausgangsseitig angefahren werden proportional zum Unterschied der aufeinander folgenden Messwerte. Je größer der Unterschied, desto schneller folgt die Ausgangsseite der Glättungseinheit ihren eingangsseitigen Änderungen.

Gemäß einer bevorzugten Ausgestaltung wird der Anlagenleistungsgradient dp/dt einem mit oberer Integratorgrenze und unterer Integratorgrenze ausgerüsteten Integrator zugeführt und der Ausgang des Integrators $P_{l+1}$, die Anlagenistleistung $P_l$ und die Nennmaximalleistung $P_{max,nenn}$ werden einer Minimalauswahleinheit als Eingangssignale zugeführt, welche ihr kleinstes Eingangssignal an eine Addiereinheit überträgt, die zu dem kleinsten Eingangsignal der Minimalauswahleinheit eine vorgegebene Offsetleistung unter Gewinnung der Anlagenmaximalleistung $P_{max}$ addiert, wobei die Anlagenmaximalleistung $P_{max}$ gleichzeitig als neue obere Integratorgrenze verwendet wird. Auf diese Art und Weise ist sichergestellt, dass die Anlagenistleistung sich mit der vorgegebenen Anlagenistleistung wie gewünscht verändert.

Der hier verwendeten Leistungsbegriffe berücksichtigen vorteilhafterweise nur die Wirkleistung.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei

Figur 1      eine schematische Darstellung eines im Meergebiet aufgestellten Windparks,

Figur 2      ein Ausführungsbeispiel des erfindungsgemäßen Verfahrens in einer schematischen Darstellung und

Figur 3      eine genauere Darstellung eines Regelungsteils von Figur 2 zeigen.

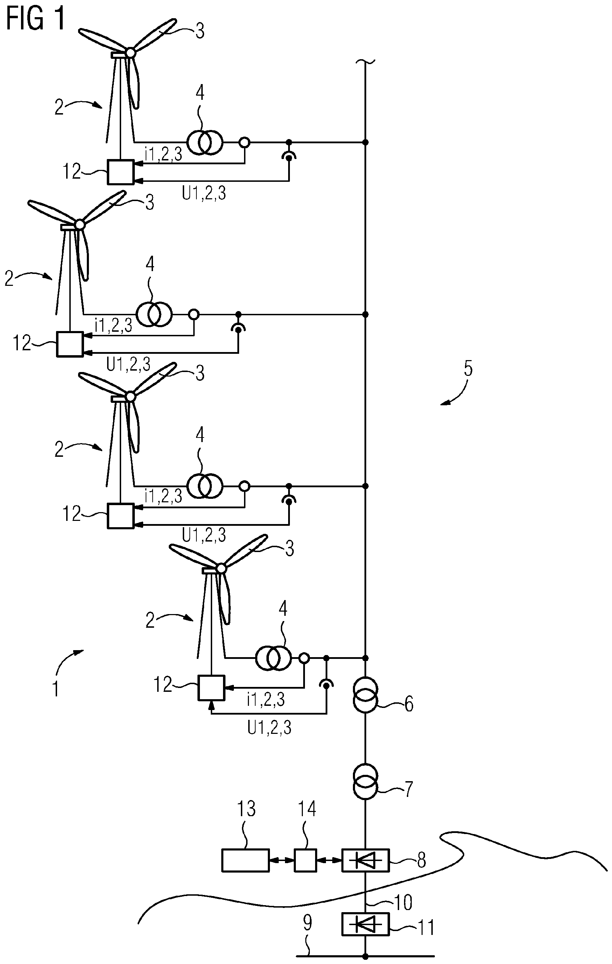

Figur 1 zeigt ein Ausführungsbeispiel des erfindungsgemäßen Windparks 1, der eine Vielzahl von Windenergieanlagen 2 aufweist. Jede Windenergieanlage 2 verfügt über einen figürlich nicht dargestellten Generator, dessen Läufer drehfest mit Rotorblättern 3 verbunden ist, die bei Windaufkommen in Drehung versetzt werden. Auf diese Weise wird von dem Generator eine elektrische Leistung bereitgestellt, die über einen Umrichter in Gleichspannung und anschließend wieder in Wechselspannung überführt wird. Die so gewonnene Wechselspannung wird anschließend über einen Transformator 4 in ein Windparknetz 5 eingespeist, das über Transformatoren 6 und 7 mit einem als Gleichrichter betriebenen Umrichter 8 verbunden ist. Der Windpark 2, das Windparknetz 5 und der Umrichter 8 sind wegen des dort herrschenden hohen Windaufkommens in einem Meeresgebiet aufgestellt. Zur Übertragung der von den Windenergieanlagen 2 gewonnenen elektrischen Leistung an ein landseitig angeordnetes Wechselspannungsnetz 9 dient eine Gleichspannungsverbindung 10, die sich zwischen dem Umrichter 8 und einem weiteren Umrichter 11 erstreckt, wobei der Umrichter 11 als Wechselrichter betrieben wird. Die über die Gleichspannungsverbindung 10 miteinander verbundenen Umrichter 8 und 11 bilden eine Hochspannungsgleichstromübertragungsanlage aus.

In dem in Figur 1 dargestellten Ausführungsbeispiel sind die Umrichter 8 und 11 so genannte Multilevel-Umrichter und verfügen jeweils über eine Brückenschaltung aus Leistungshalbleiterventilen, die wiederum aus einer Reihenschaltung aus bipolaren Submodulen zusammengesetzt sind. Jedes Submodul verfügt über einen Energiespeicher, beispielsweise einen Kondensator, und über eine Schaltung aus Leistungshalbleitern, mit deren Hilfe die an dem Energiespeicher abfallende Spannung, die hierzu invertierte Spannung oder aber eine Nullspannung an den Ausgang jedes Submoduls gelegt werden kann. Durch die Ansteuerung der Leistungshalbleiter aller Submodule eines Umrichterventils, ist es daher möglich, die an dem Umrichterventil jeweils abfallende Spannung stufenweise zu steuern. Dabei entspricht die Stufenhöhe der Spannungsregelung der an einem der Energiespeicher abfallenden Spannung.

Bei einem hiervon abweichenden Ausführungsbeispiel besteht der Umrichter hingegen aus einer Reihenschaltung von abschaltbaren Leistungshalbleitern, denen jeweils eine Freilaufdiode antiparallel geschaltet ist. Auf diese Weise ist ein zwei-, drei oder fünfstufiger Umrichter ausgebildet.

Die Gleichspannungsverbindung 10 ist beispielsweise als so genannte bipolare Gleichspannungsverbindung ausgebildet und verfügt über einen positiven sowie über einen negativen Leitungsstrang, die üblicherweise als Pole bezeichnet werden. Die Pole der Gleichspannungsverbindung können je nach eingesetzter Umrichtertopologie über Kondensatoren miteinander verbunden sein. Die verschiedenen Umrichtertopologien sind jedoch als solche bekannt, so dass an dieser Stelle hierauf nicht genauer eingegangen zu werden braucht.

Zur Regelung der von jeder Windenergieanlage 2 erzeugten Anlagenistleistung ist jeder Windenergieanlage 2 eine Anlagenregelungseinheit 12 zugeordnet. Dabei ist jede Anlagenregelungseinheit 12 mit einem im Windparknetz 5 angeordneten Stromsensor zur Ermittlung des Wechselstromes i1, 2, 3 und mit einem Spannungssensor zur Ermittlung der Drehspannung U1, 2, 3 verbunden. Dazu sind die Messsensoren zum Erfassen des Wechselstromes i1, 2, 3 und der Wechselspannung dem jeweiligen Transformator aus Sicht der Windenergieanlage unmittelbar nachgeschaltet. Aus den Stromwerten i1, 2, 3 und den Spannungswerten U1, 2, 3 ermittelt jede Anlagenregelungseinheit 12 auf bekannte Art und Weise die von der ihr zugeordneten Windenergieanlage 12 erzeugte und ins Windparknetz eingespeiste Anlagenistleistung $P_I$. Aus den gemessenen Wechselspannungswerten U1, 2, 3 lässt sich ferner die im Windparknetz 5 durch den Umrichter 8 erzeugte Istfrequenz ermitteln.

Zur Regelung der vom gesamten Windpark in Summe abgebenden Leistung $\sum_I P_I$ dient eine Windparkregelungseinheit 13, die mit einer Umrichterregelungseinheit 14 verbunden ist, wobei die Umrichterregelungseinheit 14 für die Regelung des Umrichters 8 zuständig ist. Mit anderen Worten bestimmt die Umrichterregelungseinheit 14 die Istfrequenz $\gamma_{ist}$ des Windparknetzes 5. Soll beispielsweise die vom Windpark 1 in Summe abgegebene Leistung $\sum_I P_I$ herabgesetzt werden, steuert die Windparkregelungseinheit 13 die Umrichterregelungseinheit 14 so an, dass diese im Windparknetz 5 die Wechselspannung U1, 2, 3 eine Istfrequenz $\gamma_{ist}$ erzeugt, aus der jede Anlagenregelungseinheit 12 einen gewünschten allen Windenergieanlagen 2 gemeinsamen Windparkvorgabewert ermittelt. Der Windparkvorgabewert ist in dem gezeigten Ausführungsbeispiel ein Windparkleistungsgradient. Aus dem Windparkleistungsgradienten leitet jede Anlagenregelungseinheit 12 auf der Grundlage ermittelter oder vorgegebener Anlagenparameter wie Standort, Windenergie, Windrichtung und dergleichen, einen der jeweiligen Windenergieanlage 2 zugeordneten Anlagenleistungsgradienten dp/dt. Die auf diese Weise ermittelten Anlagenleistungsgradienten sind daher in der Regel von Windenergieanlage zu Windenergieanlage unterschiedlich. Der Anlagenleistungsgradient wird schließlich der Regelung der jeweiligen Windenergieanlage zugrunde gelegt. Eine zusätzliche Kommunikation zwischen Windparkregelungseinheit 13 und Anlagenregelungseinheit 12 ist hier überflüssig.

Die Windparkregelungseinheit 13 erhält den Windparkvorgabewert beispielsweise von einer figürlich nicht dargestellten Leitstelle.

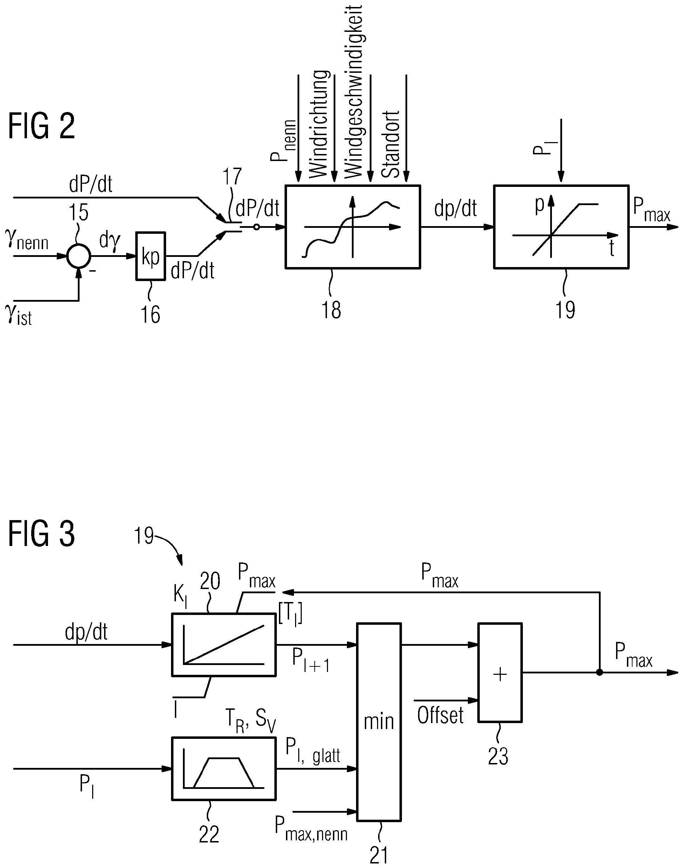

Figur 2 verdeutlicht ein Ausführungsbeispiel des erfindungsgemäßen Verfahrens genauer, wobei die in jeder Anlagenregelungseinheit 12 ablaufenden Regelungsschritte verdeutlicht sind. Es ist erkennbar, dass die erfasste Istfrequenz $\gamma_{ist}$ des Windparknetzes 5 einem Addierer 15 der Anlagenregelungseinheit 12 zugeführt wird, der die Differenzfrequenz $d\gamma$ durch Bilden der Differenz zwischen einer fest vorgegebenen Nennfrequenz $\gamma_{nenri}$ und der Istfrequenz $\gamma_{ist}$ ermittelt. Aus der zeitlichen Veränderung der Differenzfrequenz $d\gamma/dt$ leitet eine Dekodiereinheit 16 den Windparkleistungsgradienten dP/dt her. In dem gezeigten Ausführungsbeispiel wird dieser Windparkleistungsgradient dP/dt zusätzlich noch durch ein Funksignal von der Windparkregelungseinheit 13 an jede Anlagenregelungseinheit 12 übertragen, wobei eine Auswahleinheit 17 vorgesehen ist, die bei Ausfall eines Übertragungsweges auf den jeweils anderen Übertragungsweg umschaltet. Der Windparkleistungsgradient dP/dt wird schließlich einer Anlagenkennlinieneinheit 18 zugeführt, welche aus dem Windparkleistungsgradienten dP/dt einen Anlagenleistungsgradienten dp/dt berechnet. Hierbei gehen für jede Windenergieanlage 2 spezifische Anlagenparameter, wie eine der Windenergieanlage 2 zugeordnete Nennleistung $P_{Nenn}$, eine an der Windenergieanlage 2 gemessene Windrichtung und Windgeschwindigkeit sowie weitere Standortparameter der Windenergieanlage in die Berechnung ein. Hierbei liegt der Windparkleistungsgradient normiert vor, so dass ihm die Einheiten [p.u.]/sec zugeordnet werden können. Der Anlagenleistungsgradient dp/dt liegt hingegen unnormiert vor und weist die Einheiten MW/sec auf. Mit Hilfe einer Berechnungseinheit 19 wird aus dem Anlagenleistungsgradienten dp/dt und der von der jeweiligen Windenergieanlage 2 erzeugte Anlagenistleistung die Anlagenmaximalleistung $P_{Max}$ ermittelt.

Figur 3 verdeutlicht die Berechnungseinheit 19 genauer. Es ist erkennbar, dass der Anlagenleistungsgradient dp/dt einem Integrator 20 zugeführt wird. Der Integrator 20 weist eine obere Integratorgrenze $P_{Max}$ sowie eine untere Integratorgrenze I auf, wobei die untere Integratorgrenze I beispielsweise dem Eigenleistungsbedarf der jeweiligen Windenergieanlage entspricht. Der Ausgang des Integrators $P_{I+1}$ wird gemeinsam mit der gemessenen Anlagenistleistung $P_I$ und einer der jeweiligen Windenergieanlage fest zugeordneten Nennmaximalwirkleistung $P_{Max,Nenn}$ einer Minimalauswahleinheit 21 zugeführt, die aus den genannten Eingangsgrößen den kleinsten Wert an ihren Ausgang weiterleitet. Die Anlagenistleistung $P_I$ ist aufgrund der schnellen Windänderungen hohen Schwankungen unterworfen. Um nachteilige Auswirkungen solcher schneller Schwankungen zu unterdrücken, wird die Anlagenistleistung, bevor sie der Minimalauswahleinheit 21 zugeführt wird, zeitlich geglättet. Dies erfolgt in Figur 3 durch eine Rampeneinheit 22, die eine Rampenfunktion auf die eingehenden Anlagenistleistungswerte anwendet. Auf diese Weise werden nur nachhaltige oder mit anderen Worten Veränderungen mit einer längeren Dauer weitergeleitet. Eine solche Rampeneinheit 22 ist dem Fachmann jedoch bekannt, so dass an dieser Stelle hierauf nicht genauer eingegangen zu werden braucht.

Der Ausgang der Minimalauswahleinheit 40 wird einem Addierer 23 zugeführt, der zu dem minimalen Eingangssignal der Minimalauswahleinheit 21 eine für jede Windenergieanlage fest vorgegebenen Offsetleistung unter Gewinnung der Anlagenmaximalleistung $P_{Max}$ hinzuaddiert. Die Anlagenmaximalleistung $P_{Max}$ wird anschließend der weiteren Regelung der Windenergieanlage in dem Sinne zugrunde gelegt, dass wie in Figur 2 angedeutet, die Anlagenistleistung $P_I$ kleiner gehalten wird als die Anlagenmaximalleistung $P_{Max}$. Darüber hinaus wird die Anlagenmaximalwirkleistung $P_{Max}$ auch als obere Integratorgrenze für den Integrator 20 verwendet.

Bei einem hohen Energiebedarf im Wechselspannungsnetz 9, siehe Figur 1, wird die Regelung der Windenergieanlagen 2 so betrieben, dass die maximale Leistung, $P_{Max,Nenn}$ + Offsetleistung, bereitgestellt wird. Soll die Leistung des Windparks 1 heruntergefahren werden, wirkt die Windparkregelungseinheit 13 so auf die Umrichterregelungseinheit 14 ein, dass die Istfrequenz $\gamma_{ist}$ im Windparknetz 5 gegenüber der Nennfrequenz $\gamma_{nenn}$ herabgesetzt wird. Die Dekodiereinheit 16 erzeugt einen entsprechenden Windparkleistungsgradienten dP/dt, aus dem dann mittels der Anlagenkennlinieneinheit 18 ein negativer Anlagenleistungsgradient dp/dt bereitgestellt wird. Der Ausgang des Integrators 20 $P_{I+1}$ wird somit kleiner als $P_{I,glatt}$ und als $P_{Max,Nenn}$ und sorgt daher für eine Abnahme von $P_{Max}$ und somit für ein kleiner werdendes $P_I$ der jeweiligen Windenergieanlage 2.

Ist die gewünschte Anlagenleistung $P_I$ erreicht, wird dp/dt gleich Null gesetzt, $P_{I+1}$ ist somit zeitlich konstant. Je nachdem welcher Wert $P_I$ oder $P_{I+1}$ kleiner ist, liegt am Ausgang der Minimalauswahleinheit 21 $P_I$ oder $P_{I+1}$ an. $P_{Max}$ ist aufgrund der Offsetleistung jedoch größer, so dass die Regelung der Windenergieanlage so erfolgt, dass auch $P_I$ größer wird oder werden kann. So lange der Anlagenleistungsgradient dp/dt jedoch Null ist, ändert sich $P_{I+1}$ nicht, so dass es zu keiner Zunahme kommt. $P_{I+1}$ bleibt der kleinste Eingangswert der Minimalauswahleinheit 21. Eine Steigerung der Anlagenistleistung $P_I$ erfolgt erst mit positiven Anlagenleistungsgradienten dp/dt, der für einen Zuwachs von $P_{I+1}$ sorgt.

**Patentansprüche**

1.   Verfahren zum Regeln der von einem Windpark (1) abgegebenen Leistung, wobei der Windpark (1) über Windenergieanlagen (2) verfügt, die mittels eines Windparknetzes (5) elektrisch miteinander verbunden sind, bei dem

- eine Windparkregelungseinheit (13) einen Windparkvorgabewert an Anlagenregelungseinheiten (12) überträgt, die jeweils zum Regeln einer Windenergieanlage (12) vorgesehen sind,
- alle Anlagenregelungseinheiten (12) den gleichen Windparkvorgabewert erhalten,
- wobei jede Anlagenregelungseinheit (12) auf der Grundlage des Windparkvorgabewertes und auf der Grundlage einer gemessenen Anlagenistleistung ($P_I$), die der von der zugeordneten Windenergieanlage (2) erzeugten Leistung entspricht, eine Anlagenmaximalleistung ($P_{max}$) ermittelt,
- die jeweils zugeordnete Windenergieanlage (2) so regelt, dass die Anlagenistleistung ($P_I$) kleiner ist als die Anlagenmaximalleistung ($P_{max}$), wobei der Windparkvorgabewert ein Windparkleistungsgradient (dP/dt) ist, wobei jede Anlagenregelungseinheit (12) aus dem Windparkleistungsgradient (dP/dt) einen auf sie zugeschnittenen Anlagenleistungsgradienten (dp/dt) ableitet und die Berechnung der ihr zugeordneten Anlagenmaximalleistung ($P_{max}$) auf der Grundlage ihres Anlagenleistungsgradienten (dp/dt) erfolgt, und wobei
- die Windparkregelungseinheit (13) mit einer Umrichterregelungseinheit (14) verknüpft ist und ein mit dem Windpark (1) verbundener Umrichter (8) so geregelt wird, dass dieser im Windparknetz (5) eine Wechselspannung (U1, 2, 3) erzeugt, deren Istfrequenz ($\gamma_{ist}$) dem Windparkvorgabewert entspricht, wobei jede Anlagenregelungseinheit (12) die Istfrequenz ($\gamma_{ist}$) erfasst und aus der Istfrequenz ($\gamma_{ist}$) den Windparkvorgabewert ermittelt.

2. Verfahren nach Anspruch 1,
   **dadurch gekennzeichnet, dass**
   der Umrichter (8) die vom Windpark (1) abgegebene elektrische Leistung über eine Gleichspannungsverbindung (10) an einen weiteren Umrichter (11) überträgt, der mit einem Wechselspannungsnetz (9) verbunden ist, so dass zwischen dem Windparknetz (5) und dem Wechselspannungsnetz (9) eine HGÜ-Verbindung bereitgestellt ist.

3. Verfahren nach Anspruch 1,
   **dadurch gekennzeichnet, dass**
   jede Anlagenregelungseinheit (12) die ihr zugeordnete Anlagenistleistung ($P_I$) dem Anlagenleistungsgradienten (dp/dt) entsprechend unter Gewinnung der Anlagenmaximalleistung ($P_{max}$) verändert, wobei die Anlagenistleistung auf eine vorgegebene Nennmaximalwirkleistung ($P_{max,nenn}$) begrenzt wird.

4. Verfahren nach Anspruch 3,
   **dadurch gekennzeichnet, dass**
   jeder Windenergieanlage (2) eine Nennmaximalleistung ($P_{max,nenn}$) zugeordnet ist.

5. Verfahren nach Anspruch 3 oder 4,
   **dadurch gekennzeichnet, dass**
   die Dynamik einer Veränderung der Anlagenistleistung ($P_I$) mittels einer Glättungseinheit (22) herabgesetzt wird.

6. Verfahren nach Anspruch 5,
   **dadurch gekennzeichnet, dass**
   die Glättungseinheit (22) eine Rampenfunktion oder eine Verzögerungsfunktion zur Anwendung bringt.

7. Verfahren nach einem der Ansprüche 3 bis 6,
   **dadurch gekennzeichnet, dass** Anlagenleistungsgradienten (dp/dt) einem mit oberer Integratorgrenze und unterer Integratorgrenze ausgerüsteten Integrator (26) zugeführt, der Ausgang des Integrators (20), die Anlagenistleistung ($P_I$) und die Nennmaximalleistung ($P_{max,nenn}$) einer Minimalauswahleinheit (21) als Eingangssignale zugeführt werden, welche ihr kleinstes Eingangssignal an eine Addiereinheit (23) überträgt, die zu dem kleinsten Eingangsignal der Minimalauswahleinheit eine vorgegebene Offsetleistung unter Gewinnung der Anlagenmaximalleistung ($P_{max}$) addiert, wobei die Anlagenmaximalleistung ($P_{max}$) gleichzeitig als neue obere Integratorgrenze verwendet wird.

8. Verfahren nach einem der vorhergehenden Ansprüche,
   **dadurch gekennzeichnet, dass**
   der Windparkvorgabewert zusätzlich mittels eines Funksignals, eines Satellitensignals oder eines Kommunikationsleiters an jede Anlagenregelungseinheit (12) übertragen wird.

**Claims**

1. Method for controlling the power emitted from a wind farm (1), wherein the wind farm (1) has wind energy installations (2) which are electrically connected to one another by means of a wind farm network (5), in which

   - a wind farm control unit (13) transmits a wind farm preset value to installation control units (12) which are each intended to control one wind energy installation (12),
   - all the installation control units (12) receive the same wind farm preset value,
   - wherein each installation control unit (12) determines an installation maximum power ($P_{max}$) on the basis of the wind farm preset value and on the basis of a measured installation actual power ($P_I$), which corresponds to the power produced by the associated wind energy installation (2),
   - the respectively associated wind energy installation (2) is regulated such that the installation actual power ($P_I$) is less than the installation maximum power ($P_{max}$),
   wherein the wind farm preset value is a wind farm power gradient (dP/dt), wherein each installation control unit (12) derives an installation power gradient (dp/dt) which is tailor-made for it from the wind farm power gradient (dP/dt), and the installation maximum power ($P_{max}$) associated with it is calculated on the basis of its installation power gradient (dp/dt), and wherein
   - the wind farm control unit (13) is linked to a converter control unit (14), and a converter (8) which is connected to the wind farm (1) is controlled such that it produces an AC voltage (U1, 2, 3) in the wind farm network (5), whose actual frequency ($\gamma_{act}$) corresponds to the wind farm preset value, wherein each installation control unit (12) detects the actual frequency ($\gamma_{act}$) and determines the wind farm preset value from the actual frequency ($\gamma_{act}$).

2. Method according to Claim 1,
   **characterized in that**
   the converter (8) transmits the electrical power emitted from the wind farm (1) via a DC voltage link (10) to a further converter (11) which is connected to an AC voltage network (9), such that an HVDCT link is produced between the wind farm network (5) and the AC voltage network (9).

3. Method according to Claim 1, **characterized in that** each installation control unit (12) varies the installation actual power ($P_I$) associated with it corresponding to the installation power gradient (dp/dt) resulting in the installation maximum power ($P_{max}$), wherein the installation actual power is limited to a predetermined rated maximum raw power ($P_{max, rated}$).

4. Method according to Claim 3, **characterized in that** each wind energy installation (2) has an associated rated maximum power ($P_{max, rated}$).

5. Method according to Claim 3 or 4, **characterized in that** the dynamics of a change to the installation actual power ($P_I$) are reduced by means of a smoothing unit (22).

6. Method according to Claim 5, **characterized in that** the smoothing unit (22) uses a ramp function or a delay function.

7. Method according to one of Claims 3 to 6, **characterized in that** installation power gradients (dp/dt) are supplied to an integrator (26) which is equipped with an upper integrator limit and a lower integrator limit, the output of the integrator (20), the installation actual power ($P_I$) and the rated maximum power ($P_{max,rated}$) are supplied as input signals to a minimum selection unit (21), which transmits its minimum input signal to an addition unit (23) which adds a predetermined offset power to the minimum input signal of the minimum selection unit, resulting in the installation maximum power ($P_{max}$), wherein the installation maximum power ($P_{max}$) is at the same time used as the new upper integrator limit.

8. Method according to one of the preceding claims, **characterized in that** the wind farm preset value is additionally transmitted to each installation control unit (12) by means of a radio signal, a satellite signal or a communication conductor.

**Revendications**

1. Procédé de régulation de la puissance donnée par un parc (1) éolien, le parc (1) éolien disposant d'installations d'énergie éolienne, qui sont connectées entre elles électriquement au moyen d'un réseau (5) de parc éolien, dans lequel

- une unité (13) de régulation du parc éolien transmet une valeur de prescription de parc éolien à des unités de régulation d'installation prévues chacune pour réguler une installation (12) d'énergie éolienne,
- toutes les unités (12) de régulation d'installation reçoivent la même valeur de prescription de parc éolien,
- dans lequel chaque unité (12) de régulation d'installation détermine une puissance ($P_{max}$) maximum d'installation sur la base de la valeur de prescription de parc éolien et sur la base d'une puissance ($P_I$) réelle d'installation mesurée, qui correspond à la puissance produite par l'installation (2) d'énergie éolienne associée,
- l'installation (2) d'énergie éolienne associée respectivement est réglée de manière à ce que la puissance ($P_I$) réelle d'installation soit plus petite que la puissance ($P_{max}$) maximum d'installation, la valeur de prescription de parc éolien étant un gradient (dP/dt) de puissance de parc éolien, chaque unité (12) de régulation d'installation déduisant, du gradient (dP/dt) de puissance de parc éolien, un gradient (dp/dt) de puissance d'installation, qui lui est adapté et effectuant le calcul de la puissance ($P_{max}$) maximum d'installation, qui lui est associée, sur la base de son gradient (dp/dt) de puissance d'installation et dans lequel
- l'unité (13) de régulation de parc éolien est combinée à une unité (14) de régulation d'onduleur et on régule un onduleur (8) relié au parc (1) éolien, de manière à ce qu'il produise, dans le réseau (5) de parc éolien, une tension (U1, 2, 3) alternative, dont la fréquence ($\gamma$ ist) réelle correspond à la valeur de prescription de parc éolien, chaque unité (12) de régulation d'installation détectant la fréquence ($\gamma$ ist) réelle et déterminant la valeur de prescription de parc éolien à partir de la fréquence ($\gamma$ ist) réelle.

2. Procédé suivant la revendication 1, **caractérisé en ce que** l'onduleur (8) transmet la puissance électrique donnée par le parc (1) éolien par l'intermédiaire d'une liaison (10) de tension continue à un autre onduleur (11), qui est connectée à un réseau (9) de tension alternative, de manière à disposer d'une liaison à courant continu de haute tension entre le réseau (5) de parc éolien et le réseau (9) à tension alternative.

3. Procédé suivant la revendication 1, **caractérisé en ce que** chaque unité (12) de régulation d'installation modifie la puissance ($P_I$) réelle d'installation, qui lui est associée, conformément au gradient (dp/dt) de puissance d'installation, en obtenant la puissance ($P_{max}$) maximum d'installation, dans lequel on limite la puissance réelle d'installation à une puissance ($P_{max, nenn}$) active maximum nominale donnée à l'avance.

4. Procédé suivant la revendication 3,
**caractérisé en ce qu'**
une puissance ($P_{max, nenn}$) maximum nominale est associée à chaque installation (2) d'énergie éolienne.

5. Procédé suivant la revendication 3 ou 4,
**caractérisé en ce que**
l'on abaisse la dynamique d'une variation de la puissance ($P_I$) réelle d'installation au moyen d'une unité (22) de lissage.

6. Procédé suivant la revendication 5,
**caractérisé en ce que**
l'unité (22) de lissage utilise une fonction de rampe ou une fonction de retard.

7. Procédé suivant l'une des revendications 3 à 6,
**caractérisé en ce que**
des gradients (dp/dt) de puissance d'installation sont envoyés à un intégrateur (26) équipé d'une limite supérieure d'intégrateur et d'une limite inférieure d'intégrateur, le signal de sortie de l'intégrateur (20), la puissance ($P_I$) réelle d'installation et la puissance ($P_{max, nenn}$) maximum nominale sont envoyés à une unité (21) de sélection minimum, comme signaux d'entrée, unité qui transmet son signal d'entrée le plus petit à une unité (23) d'addition, qui additionne, au signal d'entrée le plus petit de l'unité de sélection minimum, une puissance d'offset donnée à l'avance, en obtenant la puissance ($P_{max}$) maximum d'installation, la puissance ($P_{max}$) maximum d'installation étant utilisée en même temps, comme nouvelle limite supérieure de l'intégrateur.

8. Procédé suivant l'une des revendications précédentes,
**caractérisé en ce que**
l'on transmet la valeur de prescription de parc éolien supplémentairement, au moyen d'un signal radio, d'un signal par satellite ou d'un conducteur de communication, à chaque unité (12) de régulation d'installation.

FIG 1

# FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10044262 A1
- EP 1752659 A2
- WO 03030329 A
- WO 2009019306 A1
- EP 1879277 A2

- DE 102006032389 A1
- DE 102004048341 A1
- WO 0152379 A2
- EP 1337754 B1
- WO 9745908 A